(19) Europäisches Patentamt
European Patent Office
Office européen des brevets

(11) **EP 4 745 182 A1**

(12) **EUROPEAN PATENT APPLICATION**
published in accordance with Art. 153(4) EPC

(43) Date of publication:
**20.05.2026 Bulletin 2026/21**

(21) Application number: **24839639.2**

(22) Date of filing: **04.07.2024**

(51) International Patent Classification (IPC):
*C08J 5/18* (2006.01)    *B29C 61/02* (2006.01)
*B29C 61/06* (2006.01)    *C08G 63/00* (2006.01)
*C08L 67/00* (2006.01)

(52) Cooperative Patent Classification (CPC):
Y02W 30/80

(86) International application number:
**PCT/JP2024/024217**

(87) International publication number:
**WO 2025/013747 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.07.2023 JP 2023115219**

(71) Applicant: **Toyobo Co., Ltd.**
**Kita-ku**
**Osaka-shi, Osaka 530-0001 (JP)**

(72) Inventors:
• **SUGIMORI, Koichi**
  **Inuyama-shi, Aichi 484-8508 (JP)**
• **ISHIMARU, Shintaro**
  **Inuyama-shi, Aichi 484-8508 (JP)**

(74) Representative: **Vossius & Partner**
**Patentanwälte Rechtsanwälte mbB**
**Siebertstraße 3**
**81675 München (DE)**

(54) **HEAT-SHRINKABLE POLYESTER FILM, LABEL, AND PACKAGE**

(57)    An object of the present invention is to provide a heat-shrinkable polyester film that suppresses the deterioration of shrinkage finish property accompanying performance deterioration after aging and contains a larger amount of a recycled polyester raw material useful for reducing the environmental burden. The heat-shrinkable polyester film contains a polyester composition containing 1% by mass or more and 50% by mass or less of a mechanically recycled and/or chemically recycled polyester. The heat-shrinkable polyester film has a shrinkage stress of 3.0 MPa or more and 15.0 MPa or less and an intrinsic viscosity of 0.58 dl/g or more and 0.75 dl/g or less. An area proportion of a region having a molecular weight of 1000 or less is 1.0% or more and 6.0% or less of a total peak area in a molecular weight distribution curve obtained by gel permeation chromatography. The heat-shrinkable polyester film has a heat shrinkage rate of 20.0% or more and 80.0% or less in a main shrinkage direction when the heat-shrinkable polyester film is immersed in hot water at 90 for 10 seconds.

EP 4 745 182 A1

## Description

TECHNICAL FIELD

The present invention relates to a heat-shrinkable polyester film which has high shrinkability, has little performance deterioration due to aging, and is suitable for use in a heat-shrinkable label while using a recycled polyester such as a raw material recycled from PET bottles, and a package using the label.

BACKGROUND ART

In recent years, stretched films (so-called heat-shrinkable films) made of a polyvinyl chloride resin, a polystyrene resin, and a polyester resin and the like have been widely used for label packaging, cap sealing, and accumulation packaging and the like that also serves to protect glass bottles or PET bottles or the like and display products. Among such heat-shrinkable films, a polyvinyl chloride film disadvantageously has low heat resistance, generates hydrogen chloride gas during incineration, and causes dioxin. The polystyrene film disadvantageously has poor solvent resistance, makes it necessary to use an ink having a special composition at the time of printing, must be incinerated at a high temperature, and generates a large amount of black smoke with an unusual odor at the time of incineration. Therefore, the polyester heat-shrinkable film which has high heat resistance, is easily incinerated, and has excellent solvent resistance has been widely used as a shrinkage label, and the use amount thereof tends to increase with an increase in the distribution amount of PET containers (PET bottles).

However, meanwhile, due to the dramatic increase in the amount of the PET bottles used, garbage problems and resource saving have become social problems. As one of the countermeasures, there is an active movement to collect used PET bottles and reuse (recycle) them as resources. As the recycling technology, there are mainly mechanical recycling, chemical recycling, and thermal recycling and the like, and among them, the mechanical recycling is most widely used. Used containers are sorted, pulverized, washed, and made into resin chips again with an extruder. The resin chips are then processed into PET bottles, fibers, or films again or the like for using. Furthermore, in recent years, a polyester obtained by decomposing a polyester contained in a used PET bottle to a monomer level and then polymerizing the decomposed polyester again, that is, a chemically recycled polyester is used, and the polyester is processed into PET bottles, fibers, or films or the like again for using.

Even in a heat-shrinkable polyester film label, the partial use of the raw material recycled from PET bottles as described above makes it possible to contribute to the life cycle over the production, use, and disposal of PET and to contribute to the reduction of the environmental burden.

For example, Patent Document 1 discloses a document in which a mechanically recycled polyester is used for a heat-shrinkable polyester film. In order to exhibit heat shrinkage performance, it is important that a raw material polyester has high amorphous properties, but a polyester raw material used for PET bottles has high crystallinity in order to secure the heat stability of a container, and thus an object is to secure high amorphous properties, that is, high shrinkage performance while using recycled raw materials.

In Patent Document 1, a crystalline polyester raw material and an amorphous polyester are mixed, and transesterification is efficiently advanced while melt-extruding with an extruder in order to lower the enthalpy of fusion ($\Delta$Hm) as the index of crystallinity, so that a crystalline component is further lowered and shrinkage performance is exhibited. In order to promote this transesterification, an operation of increasing the kneading of a resin is performed, and the amount of a low molecular weight component also increases simultaneously with the increase of an amorphous component.

In general, a heat-shrinkable film is rarely used immediately after production, and is often used after being aged (stored for a long period of time) in storage or transportation or the like. The heat-shrinkable film is a film that shrinks from heat, and thus performance deterioration occurs during aging even at room temperature, which causes deteriorated shrinkage finish property. In Patent Document 2, the deterioration of shrinkage performance after aging is suppressed using a long chain molecule, and thus performance deterioration during aging is considered to occur due to a low molecular weight component (that is, a short chain molecule). Therefore, the use of the recycled raw material for the heat-shrinkable film also increases the low molecular weight as described above, which is disadvantageous in order to secure shrinkage performance after aging.

PRIOR ART DOCUMENTS

PATENT DOCUMENTS

Patent Document 1: WO2022/181436

Patent Document 2: JP-B-6337774

Patent Document 3: JP-A-2000-169623

Patent Document 4: JP-A-2000-302707

SUMMARY OF THE INVENTION

PROBLEMS TO BE SOLVED BY THE INVENTION

An object of the present invention is to solve the above problems and to provide a heat-shrinkable polyester film that suppresses the deterioration of shrinkage finish property accompanying performance deterioration after aging and contains a larger amount of a recycled polyester raw material useful for reducing the environmental burden.

MEANS FOR SOLVING THE PROBLEMS

The present invention that has solved the above problems is as follows.

1. A heat-shrinkable polyester film containing a polyester composition containing 1% by mass or more and 50% by mass or less of a mechanically recycled and/or chemically recycled polyester,

wherein the heat-shrinkable polyester film has a shrinkage stress of 3.0 MPa or more and 15.0 MPa or less, the heat-shrinkable polyester film has an intrinsic viscosity of 0.58 dl/g or more and 0.75 dl/g or less, an area proportion of a region having a molecular weight of 1000 or less is 1.0% or more and 6.0% or less of a total peak area in a molecular weight distribution curve obtained by gel permeation chromatography, and the heat-shrinkable polyester film has a heat shrinkage rate of 20.0% or more and 80.0% or less in a main shrinkage direction when the heat-shrinkable polyester film is immersed in hot water at 90°C for 10 seconds.

Here, with respect to the expression that the polyester composition "contains 1% by mass or more and 50% by mass or less of the mechanically recycled and/or chemically recycled polyester", when the polyester composition contains both the mechanically recycled polyester and the chemically recycled polyester, the expression means that the total content of both the polyesters is 1% by mass or more and 50% by mass or less. This expression means that when the polyester composition contains the mechanically recycled polyester and does not contain the chemically recycled polyester, the content of the mechanically recycled polyester is 1% by mass or more and 50% by mass or less. This expression means that when the polyester composition does not contain the mechanically recycled polyester and contains the chemically recycled polyester, the content of the chemically recycled polyester is 1% by mass or more and 50% by mass or less. Accordingly, this expression may be paraphrased as the polyester composition "containing the mechanically recycled polyester and/or the chemically recycled polyester, a total content of the mechanically recycled polyester and the chemically recycled polyester being 1% by mass or more and 50% by mass or less".
The "shrinkage stress" is a maximum shrinkage stress in the main shrinkage direction at 90°C.
2. The heat-shrinkable polyester film according to 1,

wherein the polyester composition contains the mechanically recycled polyester, and the area proportion of the region having a molecular weight of 1000 or less is 2.0% or more and 6.0% or less in the molecular weight distribution curve obtained by gel permeation chromatography.

3. The heat-shrinkable polyester film according to 1,

wherein the polyester composition contains the chemically recycled polyester, and the area proportion of the region having a molecular weight of 1000 or less is 1.0% or more and 5.5% or less in the molecular weight distribution curve obtained by gel permeation chromatography.

4. The heat-shrinkable polyester film according to any one of 1 to 3, wherein a percentage content of isophthalic acid in 100 mol% of total acid components of the polyester composition is 0.1 mol% or more and 3.0 mol% or less.

5. The heat-shrinkable polyester film according to any one of 1 to 4, wherein when the heat-shrinkable polyester film after aging is immersed in hot water at 70°C for 10 seconds after being aged under an atmosphere of 30°C/85%R.H. for 672 hours, a reduction rate of the heat shrinkage rate in the main shrinkage direction is 15.0% or less with respect to that before aging, and an enthalpy relaxation amount after aging is 4.0 J/g or less.

Hereinafter, the "reduction rate" may be referred to as an "aging reduction rate". The aging reduction rate is the absolute value of a difference between the heat shrinkage rate at 70°C in the main shrinkage direction of the heat-shrinkable film and the heat shrinkage rate at 70°C in the main shrinkage direction of the heat-shrinkable film aged at 30°C and 85%R.H. for 672 hours.

The present invention also relates to the following 6 and/or 7.

6. A heat-shrinkable label including the heat-shrinkable polyester film according to any one of 1 to 5.
7. A package in which at least a part of an outer periphery of an object to be packaged is covered with the heat-shrinkable label according to 6.

In the present invention, the following configurations are also preferable.

8. The heat-shrinkable polyester film according to any one of the above-mentioned configurations, wherein the heat-shrinkable polyester film is uniaxially stretched.
9. The heat-shrinkable polyester film according to any one of the above-mentioned configurations, wherein the heat-shrinkable polyester film is laterally uniaxially stretched, that is, uniaxially stretched in a width direction.
10. The heat-shrinkable polyester film according to any one of the above-mentioned configurations, wherein the polyester composition contains the mechanically recycled polyester.
11. The heat-shrinkable polyester film according to any one of the above-mentioned configurations, wherein the mechanically recycled polyester is mechanically recycled polyethylene terephthalate.
12. The heat-shrinkable polyester film according to any one of the above-mentioned configurations, wherein the mechanically recycled polyethylene terephthalate contains or is polyethylene terephthalate mechanically recycled from PET bottles.
13. The heat-shrinkable polyester film according to any one of the above-mentioned configurations, wherein the mechanically recycled polyethylene terephthalate contains an isophthalic acid component.
14. The heat-shrinkable polyester film according to any one of the above-mentioned configurations, wherein the polyester composition contains the chemically recycled polyester.
15. The heat-shrinkable polyester film according to any one of the above-mentioned configurations, wherein the chemically recycled polyester is chemically recycled polyethylene terephthalate.
16. The heat-shrinkable polyester film according to any one of the above-mentioned configurations, wherein the chemically recycled polyethylene terephthalate contains or is polyethylene terephthalate chemically recycled from PET bottles.
17. The heat-shrinkable polyester film according to any one of the above-mentioned configurations, wherein the chemically recycled polyethylene terephthalate contains an isophthalic acid component.
18. The heat-shrinkable polyester film according to any one of the above-mentioned configurations, wherein a content of the mechanically recycled and/or chemically recycled polyester in the polyester composition is 3% by mass or more or 5% by mass or more.
19. The heat-shrinkable polyester film according to any one of the above-mentioned configurations, wherein a content of the mechanically recycled and/or chemically recycled polyester in the polyester composition is 48% by mass or less or 46% by mass or less.
20. The heat-shrinkable polyester film according to any one of the above-mentioned configurations, wherein the heat-shrinkable polyester film has a shrinkage stress of 4.0 MPa or more or 5.0 MPa or more.
21. The heat-shrinkable polyester film according to any one of the above-mentioned configurations, wherein the heat-shrinkable polyester film has a shrinkage stress of 14.0 MPa or less or 13.0 MPa or less.
22. The heat-shrinkable polyester film according to any one of the above-mentioned configurations, wherein the area proportion of the region having a molecular weight of 1000 or less is 1.5% or more or 2.0% or more in the molecular weight distribution curve.
23. The heat-shrinkable polyester film according to any one of the above-mentioned configurations, wherein the area proportion of the region having a molecular weight of 1000 or less is 2.5% or more or 3.0% or more in the molecular weight distribution curve.
24. The heat-shrinkable polyester film according to any one of the above-mentioned configurations, wherein the area proportion of the region having a molecular weight of 1000 or less is 5.8% or less or 5.5% or less in the molecular weight distribution curve.

25. The heat-shrinkable polyester film according to any one of the above-mentioned configurations, wherein the area proportion of the region having a molecular weight of 1000 or less is 5.3% or less or 5.1% or less in the molecular weight distribution curve.

26. The heat-shrinkable polyester film according to any one of the above-mentioned configurations, wherein the main shrinkage direction, specifically, the main shrinkage direction when the heat-shrinkable polyester film is immersed in hot water at 70°C or 90°C for 10 seconds is the width direction of the heat-shrinkable polyester film.

27. The heat-shrinkable polyester film according to any one of the above-mentioned configurations, wherein the main shrinkage direction when the heat-shrinkable polyester film after aging is immersed in hot water at 70°C for 10 seconds is the width direction of the heat-shrinkable polyester film.

28. The heat-shrinkable polyester film according to any one of the above-mentioned configurations, wherein the polyester composition contains a fossil fuel-derived polyester.

29. The heat-shrinkable polyester film according to any one of the above-mentioned configurations, wherein the fossil fuel-derived polyester has an ethylene terephthalate unit.

30. The heat-shrinkable polyester film according to any of the above-mentioned configurations, wherein the fossil fuel-derived polyester contains a neopentyl glycol component and/or a 1,4-butanediol component, that is, the fossil fuel-derived polyester is a polyester in which at least neopentyl glycol and/or a 1,4-butanediol component is polymerized.

31. The heat-shrinkable polyester film according to any one of the above-mentioned configurations, wherein the fossil fuel-derived polyester contains a neopentyl glycol component, that is, the fossil fuel-derived polyester is a polyester in which at least neopentyl glycol is polymerized.

32. The heat-shrinkable polyester film according to any one of the above-mentioned configurations, wherein a total content of the mechanically recycled and/or chemically recycled polyester and the fossil fuel-derived polyester in the polyester composition is 80% by mass or more or 90% by mass or more.

33. The heat-shrinkable polyester film according to any one of the above-mentioned configurations, wherein a total content of the mechanically recycled and/or chemically recycled polyester and the fossil fuel-derived polyester in the polyester composition is 95% by mass or more or 97% by mass or more.

34. The heat-shrinkable polyester film according to any one of the above-mentioned configurations, wherein the heat-shrinkable polyester film is a single layer film.

35. A heat-shrinkable label using or including the heat-shrinkable polyester film according to any one of the above-mentioned configurations.

36. A package in which at least a part of an outer periphery of an object to be packaged is covered with the heat-shrinkable label according to any one of the above-mentioned configurations.

37. A package including: an object to be packaged; and the heat-shrinkable label according to any one of the above-mentioned configurations, the heat-shrinkable label covering at least a part of the outer periphery of the object to be packaged.

38. The package according to any one of the above-mentioned configurations, wherein the object to be packaged is a bottle, a can, a plastic container, a paper box, or a PET bottle for beverages.

EFFECT OF THE INVENTION

A heat-shrinkable polyester film of the present invention is capable of reducing the environmental burden, and exhibits a characteristic that performance deterioration due to aging is small. For this reason, even when a recycled polyester is used, a package having excellent shrinkage finish property is obtained regardless of before or after aging.

MODE FOR CARRYING OUT THE INVENTION

Hereinafter, embodiments of the present invention will be described in detail. Hereinafter, a "heat shrinkage rate" may be referred to as a "shrinkage rate". A "polyester" may be referred to as a "polyester resin".

A heat-shrinkable polyester film of the present invention (hereinafter, may be referred to as a "heat-shrinkable film") is composed of a polyester composition, and the polyester composition contains a recycled polyester. The recycled polyester refers to a polyester regenerated from used polyester products such as PET bottles and PET containers.

1. Recycled polyester

The heat-shrinkable polyester film of the present invention contains a mechanically recycled polyester and/or a chemically recycled polyester. For this reason, the environmental burden can be decreased.

The mechanically recycled polyester is obtained by crushing and washing used polyester products, sorting foreign matters, etc., and then regenerating the polyester products into flakes or pellets. The used polyester products may be, for example, in the form of bales, flakes, or pellets. The used polyester products are preferably used PET bottles.

In a case where the mechanically recycled polyester is mechanically recycled PET, when the number of moles of all dicarboxylic acid components in the mechanically recycled PET is 100 mol%, the number of moles of the content of an isophthalic acid component is preferably 10 mol% or less, more preferably 8 mol% or less, still more preferably 5 mol% or less, and yet still more preferably 3 mol% or less. The number of moles of the content of the isophthalic acid component is preferably 0.1 mol% or more, more preferably 1 mol% or more, and still more preferably 2 mol% or more. The mechanically recycled PET may contain one kind or two or more kinds that satisfy the suitable number of moles of the isophthalic acid component.

The intrinsic viscosity of the mechanically recycled polyester is preferably 0.58 dl/g or more, more preferably 0.60 dl/g or more, and still more preferably 0.62 dl/g or more. When the intrinsic viscosity is 0.58 dl/g or more, the area proportion of a region having a molecular weight of 1000 or less in the mechanically recycled polyester, that is, the amount of a low molecular weight component can be reduced, so that the deterioration of the shrinkage rate after aging of the heat-shrinkable polyester film can be further reduced. Meanwhile, the intrinsic viscosity of the mechanically recycled polyester is preferably 0.80 dl/g or less, more preferably 0.75 dl/g or less, and still more preferably 0.70 dl/g or less. When the intrinsic viscosity is 0.80 dl/g or less, the shrinkage stress of the heat-shrinkable polyester film can be suppressed, so that sink marks at the time of shrinkage finish when used as a label can be further reduced, and as a result, the label having excellent shrinkage finish property can be obtained. The mechanically recycled polyester may contain one kind or two or more kinds that satisfy the suitable intrinsic viscosity.

The area proportion of the region having a molecular weight of 1000 or less of the mechanically recycled polyester, that is, the amount of the low molecular weight component (the measurement method will be described later) is preferably 2.0% or more and 6.0% or less. When the amount of the low molecular weight component is less than 2.0%, the shrinkage stress increases. When the amount of the low molecular weight component is more than 6.0%, shrinkage performance after aging is significantly deteriorated. The amount of the low molecular weight component of the mechanically recycled polyester is preferably 2.1% or more and 5.7% or less, and more preferably 2.2% or more and 5.5% or less. The mechanically recycled polyester may contain one kind or two or more kinds that satisfy the suitable low molecular weight component.

The chemically recycled polyester is a polyester obtained by decomposing a polyester contained in a used polyester product to a monomer level or an oligomer level and then performing polymerization again. Since the chemically recycled polyester is produced using the polyester contained in the used polyester product as a raw material, the environmental burden can be decreased.

The used polyester product may be, for example, in the form of bales, flakes, or pellets. The used polyester product is preferably a used PET bottle.

Examples of a method for decomposing the polyester to the monomer level include a method in which PET bottle bales are crushed and washed, then at least ethylene glycol (EG) and a catalyst are added to this (that is, flakes), followed by heating to decompose the flakes to bis-2-hydroxyethyl terephthalate (BHET) (hereinafter may be referred to as a "BHET method") (see Patent Document 3, that is, JP-A-2000-169623). Other examples of the method for decomposing the polyester to the monomer level include a method described in Patent Document 4 (JP-A-2000-302707). Of course, the polyester may be decomposed to the monomer level or the oligomer level by methods other than those exemplified here.

Examples of the chemically recycled polyester include chemically recycled polyethylene terephthalate (hereinafter sometimes referred to as "chemically recycled PET"), chemically recycled polybutylene terephthalate, and chemically recycled polyethylene-2,6-naphthalate. These may contain a copolymerization component. Chemically recycled PET is preferable for the reason that the chemically recycled PET is easily available and is excellent in mechanical properties and heat resistance. These may be used singly or two or more kinds thereof may be used.

The chemically recycled polyester may be copolymerized with other components. Examples of the dicarboxylic acid component as a copolymerization component include isophthalic acid, naphthalenedicarboxylic acid, 4,4-diphenyldicarboxylic acid, adipic acid, sebacic acid, and any ester-forming derivative thereof. Meanwhile, examples of the diol component as a copolymerization component include diethylene glycol, hexamethylene glycol, neopentyl glycol, and cyclohexanedimethanol. Similarly, examples of the diol component also include polyoxyalkylene glycols such as polyethylene glycol and polypropylene glycol. These may be used singly or two or more kinds thereof may be used. Considering that the PET constituting PET bottles is generally copolymerized with isophthalic acid to improve formability into bottles, the chemically recycled PET preferably contains at least an isophthalic acid component as a copolymerization component.

When the number of moles of all dicarboxylic acid components and the number of moles of all polyhydric alcohol components in the chemically recycled polyester are each 100 mol%, the number of moles of the copolymerization component is preferably 10 mol% or less, more preferably 8 mol% or less, still more preferably 5 mol% or less, and yet still more preferably 3 mol% or less. The number of moles of the copolymerization component is preferably 0.1 mol% or more, more preferably 1 mol% or more, and still more preferably 2 mol% or more. The chemically recycled polyester may contain one kind or two or more kinds that satisfy the suitable number of moles of the copolymerization component.

In a case where the chemically recycled polyester is chemically recycled PET, when the number of moles of all dicarboxylic acid components in the chemically recycled PET is 100 mol%, the number of moles of the isophthalic acid component is preferably 10 mol% or less, more preferably 8 mol% or less, still more preferably 5 mol% or less, still more preferably 3 mol% or less. The number of moles of the isophthalic acid component is preferably 0.1 mol% or more, more preferably 1 mol% or more, still more preferably 2 mol% or more. One kind or two or more kinds of chemically recycled PET that satisfy such a suitable number of moles of the isophthalic acid component may be contained.

The intrinsic viscosity of the chemically recycled polyester is preferably 0.58 dl/g or more, more preferably 0.60 dl/g or more, and still more preferably 0.62 dl/g or more. When the intrinsic viscosity is 0.58 dl/g or more, the area proportion of a region having a molecular weight of 1000 or less in the chemically recycled polyester, that is, the amount of a low molecular weight component can be reduced, so that the deterioration of the shrinkage rate after aging of the heat-shrinkable polyester film can be further reduced. Meanwhile, the intrinsic viscosity of the chemically recycled polyester is preferably 0.90 dl/g or less, more preferably 0.85 dl/g or less, and still more preferably 0.80 dl/g or less. When the intrinsic viscosity is 0.90 dl/g or less, the shrinkage stress of the heat-shrinkable polyester film can be suppressed, so that sink marks at the time of shrinkage finish when used as a label can be further reduced, and as a result, the label having excellent shrinkage finish property can be obtained. The chemically recycled polyester may contain one kind or two or more kinds that satisfy the suitable intrinsic viscosity.

The area proportion of the region having a molecular weight of 1000 or less of the chemically recycled polyester, that is, the amount of the low molecular weight component is 1.0% or more and 5.5% or less. When the amount of the low molecular weight component is less than 1.0%, the shrinkage stress increases. When the amount of the low molecular weight component is more than 5.5%, shrinkage performance after aging is significantly deteriorated. The amount of the low molecular weight component of the chemically recycled polyester is preferably 1.1% or more and 5.3% or less, and more preferably 1.2% or more and 5.1% or less. The chemically recycled polyester contains a fewer low molecular weight component than that of the mechanically recycled polyester, which is more preferable. The chemically recycled polyester may contain one kind or two or more kinds that satisfy the suitable low molecular weight component.

2. Fossil fuel-derived polyester

The heat-shrinkable polyester film may contain a fossil fuel-derived polyester, that is, a virgin polyester. The fossil fuel-derived polyester is a polyester obtained by the condensation polymerization of a fossil fuel-derived diol compound and a fossil fuel-derived dicarboxylic acid compound.

The fossil fuel-derived polyester preferably has an ethylene terephthalate unit, and preferably contains ethylene terephthalate as a main constituent. Here, the main constituent refers to 50 mol% or more in 100 mol% of all ester components constituting the fossil fuel-derived polyester.

The fossil fuel-derived polyester preferably has a unit derived from one or more monomers that may be amorphous components. The description of this unit overlaps with the description below and will be omitted.

In the polyester composition, the total content of the mechanically recycled and/or chemically recycled polyester and the fossil fuel-derived polyester is preferably 80% by mass or more, more preferably 90% by mass or more, still more preferably 95% by mass or more, and yet still more preferably 97% by mass or more.

3. Polyester and additives of heat-shrinkable polyester film

The heat-shrinkable polyester film contains the polyester as described above. The polyester, that is, the polyester of the heat-shrinkable polyester film contains the mechanically recycled and/or chemically recycled polyester as described above. The polyester of the heat-shrinkable polyester film may further contain the fossil fuel-derived polyester as described above.

Hereinafter, the "polyester of the heat-shrinkable polyester film" may be referred to as a "polyester used for the heat-shrinkable polyester film".

The polyester used in the heat-shrinkable polyester film of the present invention preferably has an ethylene terephthalate unit, and preferably contains ethylene terephthalate as a main constituent. Here, the main constituent refers to 50 mol% or more of 100 mol% of all ester components constituting the polyester.

The heat-shrinkable polyester film of the present invention contains a polyester that may be an amorphous component in order to secure heat shrinkability, and specific examples of the monomer include neopentyl glycol, 1,4-cyclohexanedimethanol, 1,4-butanediol, isophthalic acid, 1,4-cyclohexanedicarboxylic acid, 2,6-naphthalenedicarboxylic acid, 1,3-propanediol, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol. Among them, neopentyl glycol, 1,4-butanediol, and isophthalic acid are preferable.

That is, the polyester of the heat-shrinkable polyester film preferably has a unit derived from one or more monomers that may be amorphous components.

In the polyester of the present invention (that is, the polyester of the heat-shrinkable polyester film), the amount of the unit derived from one or more monomers that may be amorphous components (total amount) is preferably 6 mol% or more and 30 mol% or less in 100 mol% of all polyester resin components. That is, the amount of the monomer that may be an amorphous component is preferably 6 mol% or more and 30 mol% or less in 100 mol% of a polyhydric alcohol component constituting the polyester of the heat-shrinkable polyester film or in 100 mol% of a polycarboxylic acid component. When the amount of the amorphous component is less than 6 mol%, heat shrinkage characteristics are deteriorated. The amount of the monomer that may be an amorphous component is preferably 8 mol% or more and 25 mol% or less in 100 mol% of the polyhydric alcohol component or 100 mol% of the polycarboxylic acid component in the total polyester resin.

When the monomer that may be an amorphous component is isophthalic acid, terephthalic acid and isophthalic acid are used in combination as a dicarboxylic acid component, and ethylene glycol and neopentyl glycol are used in combination as a diol component, a constituent unit composed of terephthalic acid and neopentyl glycol, a constituent unit composed of isophthalic acid and neopentyl glycol, and a constituent unit composed of isophthalic acid and ethylene glycol, and the like coexist in the polyester resin constituting the film.

Here, the constituent unit composed of isophthalic acid and neopentyl glycol is a constituent unit derived from neopentyl glycol, and is also a constituent unit derived from one or more monomers that may be amorphous components. Therefore, in the present invention, the percentage content of the constituent unit composed of isophthalic acid and neopentyl glycol is also counted as a constituent unit derived from neopentyl glycol, and is also counted as a constituent unit derived from one or more monomers that may be amorphous components. Therefore, the percentage content of the constituent unit derived from neopentyl glycol is the total percentage content of the percentage content of the constituent unit composed of isophthalic acid and neopentyl glycol and the percentage content of the constituent unit composed of terephthalic acid and neopentyl glycol. The percentage content of the constituent unit derived from one or more monomers that may be amorphous components is the total percentage content of the percentage contents of the constituent units derived from one or more monomers that may be all amorphous components, including the percentage content of the constituent unit composed of isophthalic acid and neopentyl glycol and the percentage content of the constituent unit composed of isophthalic acid and ethylene glycol. The same applies to, for example, the relationship between the percentage content of the constituent unit derived from cyclohexanedimethanol and the percentage content of the constituent unit derived from one or more monomers that may be amorphous components.

Examples of the dicarboxylic acid component other than those described above constituting the polyester of the present invention (that is, the polyester of the heat-shrinkable polyester film) include aromatic dicarboxylic acids such as orthophthalic acid; aliphatic dicarboxylic acids such as adipic acid, azelaic acid, sebacic acid, and decanedicarboxylic acid; and alicyclic dicarboxylic acids.

When the aliphatic dicarboxylic acid (for example, adipic acid, sebacic acid, or decanedicarboxylic acid or the like) is contained in the polyester, the percentage content is preferably less than 3 mol% (in 100 mol% of the dicarboxylic acid component). In the heat-shrinkable polyester film obtained using the polyester containing 3 mol% or more of the aliphatic dicarboxylic acid, film stiffness at the time of high-speed attachment is insufficient. The aliphatic carboxylic acid may be used alone or in combination of two or more thereof so as to satisfy the suitable percentage content.

It is preferable that the polyester does not contain a trivalent or higher polycarboxylic acid (for example, trimellitic acid, pyromellitic acid, and anhydrides thereof). The heat-shrinkable polyester film obtained using the polyester containing the polycarboxylic acid is less likely to achieve a required high shrinkage rate.

Examples of the polyhydric alcohol component other than those described above constituting the polyester include diethylene glycol and aromatic diols such as bisphenol A.

The polyester used in the present invention is preferably a polyester having a glass transition point (Tg) adjusted to 50 to 80°C by appropriately selecting the amount of neopentyl glycol or the amount of a monomer that may be an amorphous component. That is, the glass transition point (Tg) of the polyester of the heat-shrinkable polyester film is preferably 50 to 80°C.

It is preferable that the polyester does not contain a diol having 8 or more carbon atoms (for example, octanediol or the like) or a trivalent or higher polyhydric alcohol (for example, trimethylolpropane, trimethylolethane, glycerin, and diglycerin and the like). The heat-shrinkable polyester film obtained using the polyester containing the diol or the polyhydric alcohol is less likely to achieve a required high shrinkage rate. It is also preferable that the polyester does not contain triethylene glycol or polyethylene glycol as much as possible.

Various additives such as waxes, antioxidants, anti-static agents, crystal nucleating agents, viscosity-lowering agents, heat stabilizers, coloring pigments, coloring inhibitors, and ultraviolet absorbers can be added to the resin for forming the heat-shrinkable polyester film of the present invention as necessary.

It is preferable to add fine particles as a lubricant for improving the workability (slipperiness) of the film to the resin for forming the heat-shrinkable polyester film of the present invention. As the fine particles, any particles can be selected, and examples of inorganic fine particles include particles made of silica, alumina, titanium dioxide, calcium carbonate, kaolin, and barium sulfate and the like, and examples of organic fine particles include acrylic resin particles, melamine resin particles, silicone resin particles, and crosslinked polystyrene particles. The average particle diameter of the fine particles can be appropriately selected as necessary within a range of 0.05 to 3.0 μm (when measured by a Coulter counter).

As a method for blending the particles into the resin for forming the heat-shrinkable polyester film, for example, the particles can be added at an arbitrary stage of producing a polyester resin, but it is preferable that a slurry containing the particles dispersed in ethylene glycol or the like is added at the stage of esterification or the stage before the start of a polycondensation reaction after the completion of a transesterification reaction to advance the polycondensation reaction. It is also preferable to blend the particles by a method in which a slurry containing particles dispersed in ethylene glycol or water or the like is blended with a polyester resin raw material using a kneading extruder with a vent or a method in which dried particles are blended with a polyester resin raw material using a kneading extruder. The polyester resin raw material as used herein includes a fossil fuel-derived polyester, a chemically recycled polyester, and a mechanically recycled polyester.

4. Characteristics of heat-shrinkable polyester film of the present invention

<Percentage content of recycled polyester>

The recycled polyester contained in the heat-shrinkable polyester film of the present invention may be any one of a mechanically recycled polyester and a chemically recycled polyester, and both the polyesters may be mixed for using. The percentage content of the recycled polyester is preferably 1% by mass or more and 50% by mass or less based on 100% by mass of the entire film. That is, the content of the recycled polyester in the polyester composition is preferably 1% by mass or more and 50% by mass or less based on 100% by mass of the polyester composition of the heat-shrinkable polyester film. When the content is 1% by mass or less, contribution to the reduction of the environmental burden is extremely small. When the content is more than 50% by mass, in the case where the recycled polyester is PET, the % by mass ratio of the polyester having a specific composition that exhibits heat shrinkage performance in the entire film layer decreases, and a sufficient shrinkage rate cannot be obtained. The percentage content of the recycled polyester is preferably 3% by mass or more and 48% by mass or less, and more preferably 5% by mass or more and 46% by mass or less. As the recycled polyester, one kind or two or more kinds may be used as long as the suitable percentage content is satisfied.

<Intrinsic viscosity>

The intrinsic viscosity of the heat-shrinkable polyester film of the present invention is 0.58 dl/g or more, preferably 0.60 dl/g or more, and more preferably 0.62 dl/g or more. As the intrinsic viscosity of the heat-shrinkable polyester film is higher, the amount of the low molecular weight component in the heat-shrinkable polyester film tends to be smaller. When the intrinsic viscosity is 0.58 dl/g or more, the deterioration of the heat shrinkage rate due to aging can be reduced. Meanwhile, the intrinsic viscosity of the heat-shrinkable polyester film is 0.75 dl/g or less, more preferably 0.73 dl/g or less, and still more preferably 0.71 dl/g or less. When the intrinsic viscosity is 0.75 dl/g or less, the shrinkage stress of the heat-shrinkable polyester film can be reduced, and therefore the occurrence of sink marks at the time of the shrinkage finish of a label made of the heat-shrinkable polyester film can be prevented or reduced.

<Area proportion of region having molecular weight of 1000 or less>

In the molecular weight distribution curve obtained by the gel permeation chromatography (GPC) of the heat-shrinkable polyester film of the present invention, the area proportion of the region having a molecular weight of 1000 or less is 1.0% or more and 6.0% or less of the total peak area. The present inventors have newly found that when the area proportion is 6.0% or less, that is, when the upper limit of the content of the component having a molecular weight of 1000 or less (that is, the low molecular weight component) is set, the performance deterioration of the heat-shrinkable polyester film after aging can be suppressed. As will be described later, the present inventors have also found that a suitable numerical range of the area proportion is different between the mechanically recycled polyester and the chemically recycled polyester.

When only the mechanically recycled polyester is used, the area proportion is preferably 2.0% or more and 6.0% or less. When the area proportion is less than 2.0%, it is necessary to lower an extrusion temperature, so that an unmelted resin occurs or the shrinkage stress tends to increase. Therefore, the area proportion is preferably 2.0% or more, preferably 2.5% or more, and more preferably 3.0% or more. When the area proportion is more than 6.0%, the enthalpy relaxation amount increases and the performance after aging is deteriorated. Therefore, the area proportion is preferably 6.0% or less, preferably 5.8% or less, and more preferably 5.5% or less. The mechanically recycled polyester may contain one kind or two or more kinds that satisfy the suitable low molecular weight components.

When only the chemically recycled polyester is used, the area proportion is preferably 1.0% or more and 5.5% or less. The chemically recycled polyester is known to contain a relatively small amount of low molecular weight component because the chemically recycled polyester has a smaller heat history than that of the mechanically recycled polyester. When the area proportion is less than 1.0%, it is necessary to lower an extrusion temperature, so that an unmelted resin occurs or the shrinkage stress tends to increase. Therefore, the area proportion is preferably 1.0% or more, preferably 1.5% or more, and more preferably 2.0% or more. When the area proportion is more than 5.5%, the enthalpy relaxation amount increases and the performance after aging is deteriorated. Therefore, the area proportion is preferably 5.5% or less, preferably 5.3% or less, and more preferably 5.1% or less. The chemically recycled polyester may contain one kind or two or more kinds that satisfy the suitable low molecular weight components.

Regarding the area proportion of the region having a molecular weight of 1000 or less, as the recycled polyester, a plurality of types of recycled polyesters can be used from among other one or more types of recycled polyesters including a mechanically recycled polyester and a chemically recycled polyester. In this case, the area proportion of the region having a molecular weight of 1000 or less is not limited to a preferable range.

<Shrinkage rate of film before aging>

The heat shrinkage rate of the heat-shrinkable polyester film of the present invention in the main shrinkage direction (hereinafter, may be referred to as "warm water heat shrinkage rate") can be calculated according to the following Formula 1 from lengths before and after shrinkage after immersing the film in warm water at 70°C or 90°C for 10 seconds in a no-load state and immediately immersing the film in water at 25°C $\pm$ 0.5°C for 10 seconds.

Warm water heat shrinkage rate = {(Length before shrinkage - Length after shrinkage)/Length before shrinkage} $\times$ 100 (%) Formula 1
    Formula 1

The heat shrinkage rate at 90°C is preferably 20.0% or more and 80.0% or less. When the heat shrinkage rate is less than 20.0%, the shrinkage amount is small, and therefore when the film is used as a label, wrinkles or slack may occur in the heat-shrunk label. The shrinkage rate at 90°C is more preferably 25.0% or more, and more preferably 30.0% or more. Conversely, when the shrinkage rate at 90°C exceeds 80.0%, the shrinkage stress increases. The shrinkage rate at 90°C is preferably 79.0% or less, and more preferably 78.0% or less. Here, the "heat shrinkage rate at 90°C" can be expressed as a heat shrinkage rate in the main shrinkage direction when the heat-shrinkable polyester film is immersed in warm water at 90°C, that is, hot water at 90°C for 10 seconds. More specifically, the "heat shrinkage rate at 90°C" can be expressed as a heat shrinkage rate in the main shrinkage direction when the heat-shrinkable polyester film is immersed in hot water at 90°C in a no-load state for 10 seconds, and then the heat-shrinkable polyester film taken out from the hot water is immediately immersed in water at 25°C $\pm$ 0.5°C for 10 seconds.

The heat shrinkage rate at 70°C is preferably 10.0% or more and 40.0% or less. When the heat shrinkage rate is less than 10.0%, the shrinkage amount at low temperature is small, and when the film is used as a label, the heat-shrunk label may move (rise) to the upper part. The shrinkage rate at 70°C is more preferably 11.0% or more, and more preferably 12.0% or more. Conversely, when the shrinkage rate at 70°C exceeds 40.0%, distortion may occur in the shrunk label. The shrinkage rate at 70°C is preferably 39.0% or less, and more preferably 38.0% or less. Here, the "heat shrinkage rate at 70°C" can be expressed as a heat shrinkage rate in the main shrinkage direction when the heat-shrinkable polyester film is immersed in warm water at 70°C, that is, hot water at 70°C for 10 seconds. More specifically, the "heat shrinkage rate at 70°C" can be expressed as a heat shrinkage rate in the main shrinkage direction when the heat-shrinkable polyester film is immersed in hot water at 70°C in a no-load state for 10 seconds, and then the heat-shrinkable polyester film taken out from the hot water is immediately immersed in water at 25°C $\pm$ 0.5°C for 10 seconds.

The main shrinkage direction is preferably the width direction of the heat-shrinkable polyester film.

<Shrinkage rate of film after aging>

The heat-shrinkable polyester film aged at 30°C and 85%RH for 672 hours is immersed in warm water at 70°C under no load condition for 10 seconds, and the film is immediately immersed in water at 25°C $\pm$ 0.5°C for 10 seconds. Thereafter, the heat shrinkage rate at 70°C in the film main shrinkage direction calculated according to the above Formula 1 from lengths before and after shrinkage may be referred to as the shrinkage rate of the film after aging or the shrinkage rate after aging in the present specification. The shrinkage rate after aging is preferably 10.0% or more and 40.0% or less. When the heat shrinkage rate is less than 10.0%, the shrinkage amount at low temperature is small, and when the film is used as a label, the heat-shrunk label may move (rise) to the upper part. When the heat shrinkage rate is more than 40.0%, distortion may occur in the shrunk label. The shrinkage rate after aging is preferably 11.0% or more and 39.0% or less, and more preferably 12.0% or more and 38.0% or less.

<Aging reduction rate>

The aging reduction rate can be determined by the following method. The heat-shrinkable film (that is, the heat-shrinkable polyester film) and the heat-shrinkable film aged at 30°C and 85%R.H. for 672 hours are immersed in hot water at 70°C under no load condition for 10 seconds to be heat-shrunk, then immersed in water at 25°C ± 0.5°C for 10 seconds, and drawn out from the water. The longitudinal and transverse dimensions of the film are measured, and the heat shrinkage rates are determined according to Formula 1. At this time, in each film, a direction in which the heat shrinkage rate is large is taken as the main shrinkage direction (width direction). A difference (absolute value) between the shrinkage rate of the heat-shrinkable film and the shrinkage rate in the main shrinkage direction of the film after the aging treatment (that is, the heat-shrinkable film aged at 30°C and 85%R.H. for 672 hours) is taken as the aging reduction rate (%). That is, the aging reduction rate (%) is the absolute value of a difference between the heat shrinkage rate at 70°C in the main shrinkage direction of the heat-shrinkable film and the heat shrinkage rate at 70°C in the main shrinkage direction of the heat-shrinkable film aged at 30°C and 85%R.H. for 672 hours.

The aging reduction rate is preferably 15.0% or less, preferably 14.5% or less, and more preferably 14.0% or less. When the aging reduction rate is more than 15.0%, shrinkage characteristics after aging are deteriorated, and when the film is used as a label, slack may occur. The aging reduction rate may be, for example, 10.0% or less, 8.0% or less, or 7.0% or less. The aging reduction rate is preferably 0.0% or more. At present, even when the aging reduction rate is 1.0% or more as the technical level, the aging reduction rate of 1.0% or more is practically sufficient.

<Shrinkage stress>

The shrinkage stress of the heat-shrinkable polyester film of the present invention (one that is not placed under an aging atmosphere) is preferably 3.0 MPa or more and 15.0 MPa or less, more preferably 4.0 MPa or more and 14.0 MPa or less, and still more preferably 5.0 MPa or more and 13.0 MPa or less. Here, the "shrinkage stress" is a maximum shrinkage stress in the main shrinkage direction at 90°C. The maximum shrinkage stress in the main shrinkage direction at 90°C is usually observed within 10 seconds after the start of measurement of the shrinkage stress.

Specifically, with respect to the shrinkage stress in the main shrinkage direction (hereinafter, in the width direction) measured in hot air at 90°C, in the heat-shrinkable polyester film of the present invention (one that is not placed under an aging atmosphere), the maximum shrinkage stress usually observed within 10 seconds after the start of the measurement is preferably 3.0 MPa or more and 15.0 MPa or less, preferably 4.0 MPa or more and 14.0 MPa or less, and more preferably 5.0 MPa or more and 13.0 MPa or less. At the time of heat shrinkage, the label firmly wraps around the bottle to suppress the heat expansion of the bottle, so that it is possible to suppress the slackening of the label after the bottle is cooled. However, when the maximum shrinkage stress at 90°C in the width direction of the film is less than 3.0 MPa, the above effect may be insufficient. Conversely, when the maximum shrinkage stress at 90°C exceeds 15.0 MPa, the label cannot be gently shrunk, and distortion easily occurs in the heat-shrunk label, which is not preferable.

<Enthalpy relaxation amount>

The heat-shrinkable polyester film of the present invention preferably has an enthalpy relaxation amount of 4.0 J/g or less after aging for 672 hours under an atmosphere of 30°C and 85%R.H. In a non-reverse heat flow obtained from temperature modulation DSC measurement, an endothermic peak observed near a glass transition point shows enthalpy relaxation. The enthalpy relaxation amount can be obtained by integrating the peak area of the endothermic peak. The measurement method will be described in detail later. Enthalpy relaxation is a result of a decrease in the free volume of an amorphous part, and a molecular chain is accordingly less likely to move, so that the enthalpy relaxation appears as the endothermic peak in a DSC temperature rising process. In the heat-shrinkable polyester film, it is considered that as the enthalpy relaxation amount is larger, an amorphous molecular chain contributing to shrinkage is less likely to move, and shrinkage characteristics tend to be deteriorated. Therefore, in the present invention, the enthalpy relaxation amount after aging is preferably 4.0 g/J or less. The enthalpy relaxation amount after aging is more preferably 3.8 g/J or less, and still more preferably 3.5 g/J or less. The enthalpy relaxation amount of the film not aged under the above conditions is 0.1 g/J or less.

<Other characteristics>

The heat-shrinkable polyester film of the present invention is not particularly limited, but has a thickness of preferably 10 μm or more and 200 μm or less, and more preferably 20 μm or more and 100 μm or less. A haze value is preferably 2.0% or more and 13.0% or less. When the haze value exceeds 13.0%, there is a possibility that the transparency is poor and the appearance is poor at the time of creating a label, which is not preferable. The haze value is more preferably 11.0% or less, and particularly preferably 9.0% or less. The haze value is preferably as small as possible, but the lower limit of the haze value is about 2.0% when it is considered that a predetermined amount of lubricant has to be added to the film for the purpose of imparting slidability necessary for practical use.

The heat-shrinkable polyester film of the present invention may be subjected to a corona treatment, a coating treatment, or a flame treatment or the like in order to improve the adhesiveness of the surface of the film.

The heat-shrinkable polyester film of the present invention may have a single-layer structure or a laminated structure of two or more layers.

5. Method for producing heat-shrinkable polyester film

Hereinafter, a preferable method for producing the heat-shrinkable polyester film of the present invention when the raw material recycled from PET bottles is used as a recycled polyester raw material will be described.

A process for producing the heat shrinkage rate polyester film of the present invention includes (1) mixing and supplying raw materials, (2) melt-extruding, (3) casting step of an un-stretched sheet, (4) transverse stretching step, and (5) a final heat treatment step. Among them, in order to obtain a film having the characteristics of the present invention, it is important to mix a raw material having high amorphous properties with a raw material recycled from PET bottles and to suppress a low molecular weight component while promoting transesterification between polyester raw materials in an extrusion step to reduce the crystallinity. The method will be specifically described below.

(1) Mixing and supplying raw materials

A heat-shrinkable film generally requires an amorphous component as a raw material, but since the heat-shrinkable polyester film of the present invention uses raw material chips recycled from PET bottles, at least two or more kinds of raw material chips including the raw material recycled from PET bottles are inevitably used. As a method of use, a blending method is common, and is also employed in the present invention.

(2) Melt-extruding

In order to enhance the amorphous properties, it is important that the raw material recycled from PET bottles and the amorphous raw material are subjected to transesterification while being melted and mixed in an extruder to form a randomly copolymerized polyester. The transesterification is affected by the degree of mixing of the resin in the extruder, temperature, and time and the like.

A melt extruder is mainly composed of a cylinder and a screw, but it is preferable to use a biaxial extruder having two screws. This is because rotation provided by the two screws promotes the distributive mixing of the melted resin, increases an interfacial area between resins of different components to efficiently provide the transesterification. A uniaxial extruder has a small distributive mixing ability, and in order to promote the transesterification, a method such as increasing a resin temperature or increasing a residence time in the extruder is required. However, increasing the temperature or increasing the residence time also disadvantageously promotes the heat decomposition of the resin, and increases the amount of the low molecular weight component, which is not preferable.

In a multi-screw extruder, the rotation of the screw has the same direction rotation and different direction rotation, but it is preferable to adopt the same direction rotation. This is also for increasing the distributive mixing ability as described above.

It is preferable to use a double thread screw or a triple thread screw. A single thread screw has weak shear and does not promote transesterification, which is not preferable. However, although the triple thread screw is preferable from the viewpoint of promoting the transesterification, the conveying ability of the resin is reduced, and thus the triple thread screw may become a bottleneck for film formation in which the speed is increased. Therefore, it is most preferable to employ the double thread screw.

In a melt-mixing section near the middle of the extruder, it is preferable to use a kneading disc as a screw element. Examples of the kneading disc include kneading discs such as a type having a feeding capability (forward feeding), a type having a returning capability (reverse feeding), and a type having no feeding capability (neutral), and it is more preferable that the kneading disc is configured by combining them.

The residence time of the resin in the extruder is determined by the shape and rotation speed and the like of the screw, but is preferably 60 seconds or more and 300 seconds or less. When the residence time is less than 60 seconds, unmelted components, particularly unmelted recycled polyethylene terephthalate and a fossil fuel-derived polyester are generated, and a load is applied to the extruder. When the residence time exceeds 300 seconds, the decomposition of the resin proceeds and the low molecular weight component increases, which is not preferable. The residence time is more preferably 80 seconds or more and 280 seconds or less, and still more preferably 100 seconds or more and 260 seconds or less.

A ratio (Q/N) between the discharge amount of the extruder and the screw rotation speed expressed by Formula (2) is referred to as a filling rate, and is preferably 1.0 or more and 5.0 or less. Q is the discharge amount (kg/h), and N is the screw rotation speed (rpm). When the filling rate exceeds 5.0, the mixing of the resins is insufficient, and the transesterification is not promoted, so that the crystallinity cannot be reduced. When the filling rate is less than 1.0, the resin is apt to be deteriorated, which causes the generation of the low molecular weight component and foreign matters, which is not preferable. The filling rate is more preferably 1.2 or more and 4.8 or less, and still more preferably 1.4 or more and 4.6 or less.

$$\text{Filling rate} = \text{Discharge amount (kg/h)/Screw rotation speed (rpm)} \qquad \text{Formula}$$

$$(2)$$

The extruder is divided into a feed section, a melt-mixing section, and an extrusion section from the raw material supply side, and a cylinder temperature in the feed section is preferably 200°C or higher and 270°C or lower. When the cylinder temperature is lower than 200°C, a part of a resin (particularly a raw material recycled from PET bottles) is not completely melted, which is not preferable. When the cylinder temperature exceeds 270°C, the resin (particularly a highly amorphous raw material) is apt to wrap around the screw, which is not preferable. The cylinder temperature is more preferably 210°C or higher and 260°C or lower.

The melt-mixing section is preferably 260°C or higher and 330°C or lower. When the melt-mixing section is lower than 260°C, the transesterification reaction is not promoted, which is not preferable. When the melt-mixing section exceeds 330°C, the decomposition of the resin proceeds and the low molecular weight component is generated, which is not preferable. The melt-mixing section is more preferably 270°C or higher and 310°C or lower. The extrusion section is preferably 255°C or higher and 300°C or lower. When the extrusion section is lower than 230°C, the melt viscosity is too high, so that the resin pressure increases. This causes the subsequent failure of a piping and foreign substance filter, which is not preferable. When the extrusion section exceeds 300, the melt viscosity becomes low, and a defect such as pulsation occurs at the time of subsequent extrusion from a die, which is not preferable. The extrusion section is more preferably 257°C or higher and 290°C or lower, and still more preferably 259°C or higher and 280°C or lower.

After the extruder, a gear pump is preferably provided to adjust the supply amount and to secure the supply stability.

The extruder may be a multi-screw extruder having two or more screws. Specifically, a four-screw extruder, an eight-screw extruder, and a sixteen-screw extruder and the like can be suitably used.

(3) Casting step of un-stretched sheet

The un-stretched sheet is extruded into a sheet shape using an existing method such as a T-die method or a tubular method. Thereafter, the sheet melt-extruded by the extruder can be quenched to obtain an un-stretched film. As a method for quenching a melted resin, a method in which the melted resin from an orifice is cast onto a rotating drum where the resin is quenched and allowed to solidify to obtain a substantially unoriented resin sheet may be suitably adopted.

(4) Transverse stretching step

The stretching of the film is preferably transverse uniaxial stretching in which stretching is performed only in the width direction. It is also possible to use a method for performing longitudinal stretching in a pre-step of transverse stretching, but a production machine base is long, which is not preferable. The un-stretched sheet obtained as described above is guided to a tenter device capable of heating the sheet with both ends of the sheet being held with clips. The film is heated to a predetermined temperature by hot air, and then stretched by widening a distance between the clips while being conveyed in the longitudinal direction. A film temperature during stretching in the width direction is preferably Tg+5°C or higher and Tg+40°C or lower. When the film temperature is lower than Tg+5°C, the stretching force becomes too high and the risk of breakage increases, which is not preferable. When the film temperature exceeds Tg+40°C, the stretching force is too low, so that sufficient shrinkability cannot be imparted to the film, which is not preferable. The stretching ratio is preferably 3 times or more and 7 times or less. When the stretching ratio is less than 3 times, a required shrinkage rate cannot be obtained or stretching unevenness increases, which is not preferable. Stretching at a ratio of more than 7 times causes a high risk of breakage, which is not preferable. The stretching ratio is more preferably 3.5 times or more and 6.5 times or less, and still more preferably 4 times or more and 6 times or less.

(5) Final heat treatment step

The film after transverse stretching has a relaxation rate of 0.5% or more and 20.0% or less in a method in which the film is relaxed in the width direction by shortening a distance between film carrying clips in the tenter, and the film is relaxed at a transverse stretching temperature - 5°C or higher and + 45°C or lower for 1 second or more and 10 seconds or less. In the heat treatment step, the heat shrinkage rate is adjusted, and furthermore, the deterioration of shrinkage performance after aging is suppressed. It is presumed that the contribution to the shrinkage performance is alleviated by the heat treatment step (particularly relaxation) from the orientation of the low molecular weight component as compared with the orientation of a high molecular weight component. When the temperature is higher than the stretching temperature + 45°C, the shrinkage rate in the width direction decreases, so that necessary shrinkage characteristics cannot be obtained, which is not preferable. When the temperature is lower than the transverse stretching temperature - 5°C, a decrease in the shrinkage rate becomes large when the final product is stored at normal temperature, which is not preferable. When the relaxation rate is less than 0.5%, the molecular orientation of the low molecular weight component in the width direction is not sufficiently relaxed, which is not preferable. When the relaxation rate is more than 20%, not only the orientation of the low molecular weight component but also the orientation of the high molecular weight component is lowered, and the shrinkage characteristics are deteriorated, which is not preferable. The relaxation rate is preferably 1.0% or more and 18.0% or less, and more preferably 1.5% or more and 16.0% or less. Thus, the heat-shrinkable polyester film of the present invention is obtained.

6. Processing step

Hereinafter, a label processing step will be described as one application example of the obtained heat-shrinkable polyester film.

The heat-shrinkable polyester film of the present invention can be labeled by a conventionally known method. As an example, a heat-shrinkable polyester film cut into a desired width is subjected to appropriate printing, and the left and right ends of the film are overlapped and joined with the solvent composition to produce a tube film. The tube film is cut into an appropriate length to form a tubular label.

After the label is perforated by a known method as necessary, a PET bottle is covered with the label, the PET bottle is placed on a belt conveyor or the like, and the PET bottle is caused to pass through the inside of a shrinking tunnel of a type in which steam is blown (steam tunnel) or a shrinking tunnel of a type in which hot air is blown (hot air tunnel). When the label passes through the tunnel, the label is heat-shrunk, whereby the label is attached to a bottle container such as the PET bottle.

The package of the present invention is preferably obtained from the heat-shrinkable polyester film of the present invention, and is preferably formed by covering at least a part of the outer periphery of an object to be packaged with a label having perforations or notches and heat-shrinking the label. Examples of the object to be packaged include PET bottles for beverages, various bottles, cans, plastic containers for confectionery and lunch boxes and the like, and paper boxes. Usually, when the label obtained from the heat-shrinkable polyester film is heat-shrunk to cover the object to be packaged with the label, the label is heat-shrunk by about 5 to 70% to be brought into close contact with the package. The label with which the object to be packaged is covered may or may not be subjected to printing.

EXAMPLES

Hereinafter, the present invention will be described in more detail by way of Examples, but the following Examples do not limit the present invention, and modifications and variations made without departing from the spirit of the present invention are included in the present invention. Methods for measuring the physical properties of films obtained in Examples and Comparative Examples are as follows.

<Intrinsic viscosity>

In 50 ml of a mixed solvent of phenol/1,1,2,2-tetrachloroethane (60/40 (mass ratio)), 0.2 g of a sample (specifically, a raw material polyester and a heat-shrinkable polyester film) was dissolved, and the intrinsic viscosity (IV) was measured using an Ostwald viscometer at 30°C. The unit of intrinsic viscosity is dl/g.

<Percentage contents of terephthalic acid and isophthalic acid components>

The sample (specifically, the raw material polyester and the heat-shrinkable polyester film) was dissolved in a solvent in which chloroform D (manufactured by Euriso-Top Co., Ltd.) and trifluoroacetic acid D1 (manufactured by Euriso-Top Co., Ltd.) were mixed at 10 : 1 (volume ratio). NMR of protons in this sample solution was measured using a nuclear magnetic resonance (NMR) spectrometer ("GEMINI-200", manufactured by Varian) under the measurement conditions of a temperature of 23°C and a number of times accumulated of 64. In this NMR measurement, the peak intensity of a predetermined proton was calculated, and then the percentage contents (mol%) of the terephthalic acid component and the isophthalic acid component in 100 mol% of the acid components were calculated.

<Area proportion of region having molecular weight of 1000 or less>

In a 30 mL vial, 10 g of the sample (specifically, the raw material polyester and the heat-shrinkable polyester film) was placed, and the weight was measured. A liquid mixture of chloroform/HFIP = 98/2 (volume ratio) was added into this vial, and the vial was allowed to stand for 12 hours to dissolve the sample. This was then diluted with chloroform/hexafluoroisopropanol (HFIP) = 98/2 (volume ratio) to prepare a 0.1% solution. The 0.1% solution was filtered through a 0.45 $\mu$m filter (GL Chromatodisc Non-aqueous N type 13N manufactured by GL Sciences Inc.). The filtrate was subjected to gel permeation chromatographic (GPC) measurement under the following conditions.

Column used: TSKgel SuperHM-H $\times$ 2 and TSKgel SuperH 2000

manufactured by Tosoh Corporation

Column temperature: 40°C
Mobile phase:

chloroform/HFIP = 98/2 (volume ratio)

Flow rate: 0.6 mL/min
Injection volume: 20 $\mu$L
Detection: 254 nm (UV-Vis detector)
Molecular weight calibration: Monodisperse polystyrene (manufactured by Tosoh Corporation)
Instrument: HLC-8320GPC manufactured by Tosoh Corporation

In the molecular weight distribution curve obtained by GPC measurement, the area proportion of the region having a molecular weight of 1000 or less, that is, a low molecular weight component was determined.
In common, in GPC analysis, the area outside the calibration curve is generally excluded from the calculation range of the GPC analysis, but in this analysis, the GPC chromatogram area (that is, the total peak area) was calculated including not only the area within the calibration curve but also the area outside the calibration curve in order to determine the area proportion of the region having a molecular weight of 1000 or less more accurately.

<Heat shrinkage rate and heat shrinkage rate after aging>

A heat-shrinkable film or a film aged at 30°C and 85%R.H. for 672 hours was cut into a square of 10 cm×10 cm, immersed in hot water at a predetermined temperature $\pm$ 0.5°C for 10 seconds in a no-load state to be heat-shrunk, then immersed in water at 25°C $\pm$ 0.5°C for 10 seconds, and drawn out from the water to measure the dimensions of the film in the longitudinal and transverse directions, and the heat shrinkage rates were determined according to the following Formula 1. A direction in which the heat shrinkage rate was large was taken as a main shrinkage direction (width direction).

Heat shrinkage rate = {(Length before shrinkage - Length after shrinkage)/Length before shrinkage} $\times$ 100(%)                Formula 1

The heat shrinkage rate determined using the heat-shrinkable film is the shrinkage rate before aging, and the heat shrinkage rate measured using the film aged at 30°C and 85%R.H. for 672 hours is the shrinkage rate after aging.

<Aging reduction rate>

A heat-shrinkable film and a film aged at 30°C and 85%R.H. for 672 hours were cut into a square of 10 cm×10 cm, immersed in hot water at 70°C for 10 seconds in a no-load state to be heat-shrunk, then immersed in water at 25°C $\pm$ 0.5°C for 10 seconds, and drawn out from the water to measure the dimensions of the film in the longitudinal and transverse directions, and the heat shrinkage rates were determined according to Formula 1. A direction in which the heat shrinkage rate was large was taken as a main shrinkage direction (width direction). A difference (absolute value) between the shrinkage rate of the heat-shrinkable film and the shrinkage rate in the main shrinkage direction of the film after the aging treatment was taken as the aging reduction rate (%).

<Enthalpy relaxation amount>

Using a temperature-modulated differential scanning calorimeter (DSC) "Q100" (manufactured by TA Instruments), 4.0 mg of a film sample aged under an atmosphere of 30°C and 85%R.H. for 672 hours was weighed, and put in a hermetic aluminum pan, and measured at an average temperature rising rate of 2.0°C/min and a modulation cycle of 50 seconds in an MDSC (registered trademark) heat-only mode, and the peak area of an enthalpy relaxation portion in the vicinity of a glass transition point of a non-reverse heat flow obtained was taken as the enthalpy relaxation amount (J/g).
In a reverse heat flow obtained by performing measurement in the same manner as in the non-reverse heat flow described above, a baseline shift near Tg occurred without disturbance, and thus the measurement of the non-reverse heat flow was confirmed to be also performed normally.

<Shrinkage stress>

A sample having a length of 200 mm in a main shrinkage direction and a width of 20 mm was cut out from a heat-shrinkable film not placed in an aging environment (hereinafter, unless otherwise specified, the term "heat-shrinkable film" refers to a heat-shrinkable film not placed in an aging environment), and the shrinkage stress was measured using a strength and elongation measuring machine equipped with a heating furnace (Tensilon (registered trademark of Orientec Co., Ltd.)). The heating furnace was heated to 90°C in advance, and a distance between chucks was 100 mm. Air blowing from the heating furnace was temporarily stopped, the door of the heating furnace was opened, the sample was attached to the chucks, and then the door of the heating furnace was immediately closed to restart the air blowing. The shrinkage stress was measured for 30 seconds or more, and the maximum value during the measurement was taken as a maximum shrinkage stress (MPa).

<Shrinkage finish property>

The heat-shrinkable film was subjected to printing in gold, and the ends were then welded with dioxolane to obtain a cylindrical label (label in which the main shrinkage direction of the heat-shrinkable film was a circumferential direction). Thereafter, the polyethylene container adjusted to a temperature of 60°C was covered with the cylindrical label, and steam at 70°C was applied thereto for 13 seconds to heat-shrink the cylindrical label. The shrinkage finish property of the label was visually evaluated in five grades according to the following criteria.

    5: Best finish property (no defects)
    4: Finish property amount (with one defect)
    3: Two defects
    2: Three to five defects
    1: Many defects (6 or more)

The defects include jumping, wrinkling, insufficient shrinkage, label end folding, and shrinkage whitening.
The shrinkage finish property after aging was evaluated in the same manner using a heat-shrinkable film aged under an atmosphere of 30°C and 85%R.H. for 672 hours.

<Polyester raw materials>

(Polyester A)

Foreign materials such as the remaining beverages were washed away from PET bottles for beverages, and then the PET bottles for beverages were crushed to obtain flakes. The flakes were mixed with a 3.5% by mass sodium hydroxide solution and stirring was performed at a flake concentration of 10% by mass under conditions of 85°C and 30 minutes for washing (that is, alkali washing was performed). The flakes taken out after the alkali washing were washed with distilled water by performing stirring at a flake concentration of 10% by weight under conditions of 25°C and 20 minutes. This water washing was repeated two more times using new distilled water each time. The washed flakes were dried and then melted in an extruder, and the melted flakes were allowed to pass through a filter to remove foreign materials. The filters were installed in the extruder up to the third filter so that the opening sizes of the filters successively decreased. The opening size of the third filter was 50 μm. According to such a procedure, a mechanically recycled polyester having an intrinsic viscosity of 0.69 dl/g, namely, a polyester A was obtained.

(Polyester B)

Bales of PET bottles that had been sorted and collected were crushed while being circulated inside a wet crusher together with a cleaning solution (specifically, cleaning solution prepared by adding 500 g of liquid dishwashing detergent to 1000 liters of water). Heavy foreign materials such as metal, sand, and glass were settled using a gravity separator connected to the wet crusher, and flakes were taken out from the upper layer portion. These flakes were rinsed with pure water and centrifuged for dewatering. According to such a procedure, collected flakes were obtained.

In a stirring-type autoclave, 30 kg of collected flakes that had been melted in an undried state was mixed with a preheated liquid mixture, specifically, a liquid mixture of 150 kg of ethylene glycol and 150 g of zinc acetate dihydrate, and then fractions, such as water and acetic acid, having lower boiling points than ethylene glycol were removed. Next, the reaction was conducted for 4 hours at a temperature of 195°C to 200°C using a reflux condenser.

After the reaction was completed, the temperature of the contents in the reactor was lowered to 97°C to 98°C, and then hot filtration was performed using a filter to remove floating materials and settled materials.

The filtrate was further cooled, the crude BHET was examined to be completely dissolved, and then the filtrate was allowed to pass through an activated carbon bed at 50°C to 51°C and then through an anion/cation exchange mixed bed over 30 minutes. In other words, a prepurification treatment was carried out.

The prepurification-treated liquid was loaded into a stirring-type autoclave, and then heated to distill off the excess ethylene glycol at normal pressure, thereby obtaining a melt of concentrated BHET.

The concentrated BHET melt was allowed to cool naturally while being stirred under a nitrogen gas atmosphere, and then taken out from the stirring-type autoclave to obtain a concentrated BHET chip block.

The chip block was heated to 130°C and melted, then this was supplied into a thin film vacuum evaporator using a metering pump, evaporated, and cooled and condensed to obtain purified BHET.

Into a dissolution tank, which had been purged with nitrogen, 2650 kg of this purified BHET was supplied at once, purging with nitrogen was performed again, then the temperature of the dissolution tank was set to 150°C, and dissolution was performed. After dissolution was completed, the temperature of the dissolution tank was raised to 230°C over 30 minutes at the same time while stirrer was performed. To a polycondensation reaction tank, 2650 kg of the obtained BHET solution was transferred, antimony trioxide, cobalt acetate, phosphoric acid, and titanium dioxide were added to the BHET solution at 300 ppm, 170 ppm, 55 ppm, and 0.3% by weight with respect to the amount of PET to be obtained (about 2000 kg of PET is obtained from 2650 kg of BHET), respectively, and the temperature of the polycondensation reaction tank was gradually raised from 230°C to 290°C while stirring was performed at 10 to 40 rpm as well as the pressure was reduced to 40 Pa. Thereafter, when the stirring torque reached a predetermined value, the polycondensation reaction tank was purged with nitrogen, the pressure was returned to normal pressure, the polycondensation reaction was terminated, and the polyester was ejected in the form of strands, cooled, and immediately cut to obtain a polyester in the form of chips.

The obtained polyester was continuously supplied to a crystallization apparatus and crystallized at 150°C, and then supplied to a dryer and dried at 130°C for 10 hours. The dried polyester B was sent to a preheater, heated to 180°C, and then supplied into a solid state polymerizer. A solid state polymerization reaction was conducted in nitrogen gas at 190°C for 24 hours to obtain a chemically recycled polyester, namely, a polyester B having an intrinsic viscosity of 0.79 dl/g.

(Polyesters C to F)

In a stainless steel autoclave equipped with a stirrer, a thermometer, and a partial reflux condenser, 100 mol% of dimethyl terephthalate (DMT) as a dicarboxylic acid component and 100 mol% of ethylene glycol (EG) as a polyhydric alcohol component were charged so that the molar ratio of ethylene glycol was 2.2 times that of dimethyl terephthalate, and using 0.05 mol% (with respect to the acid component) of zinc acetate as a transesterification catalyst, a transesterification reaction was performed while generated methanol was distilled off to the outside of the system. Thereafter, 0.225 mol% (with respect to the acid component) of antimony trioxide was added as a polycondensation catalyst, and a polycondensation reaction was performed at 280°C under a reduced pressure of 26.7 Pa to obtain a polyester E having an intrinsic viscosity of 0.62 dl/g. The polyester E is polyethylene terephthalate. In the production of a polyester F, $SiO_2$ (Sylysia 266 manufactured by Fuji Silysia Chemical Ltd.) as a lubricant was added in an amount of 20,000 ppm to the polyester to obtain the polyester F. Polyesters C and D were synthesized in the same manner as in the polyester E except that the polyhydric alcohol components to be charged into the autoclave were changed according to Table 1.

In Table, TPA represents terephthalic acid, IPA represents isophthalic acid, EG represents ethylene glycol, NPG represents neopentyl glycol, BD represents 1,4-butanediol, DEG represents diethylene glycol, and CHDM represents 1,4-cyclohexanedimethanol. The intrinsic viscosity of each of the polyesters is shown in Table 1. Each of the polyesters was appropriately formed into a chip shape.

It should be noted that terephthalic acid, neopentyl glycol, diethylene glycol, and 1,4-cyclohexanedimethanol were derived from fossil fuels but not from used polyester products.

[Table 1]

| | ACID COMPONENT | | DIOL COMPONENT | | | | | INTRINSIC VISCOSITY | SILICA CONTENT | AREA PROPORTION OF REGION HAVING MOLECULAR WEIGHT OF 1000 OR LESS |
|---|---|---|---|---|---|---|---|---|---|---|
| | TPA | IPA | EG | NPG | BD | DEG | CHDM | | | |
| | mol% | mol% | mol% | mol% | mol% | mol% | mol% | dl/g | ppm | % |
| POLYESTER A | 97 | 3 | 100 | 0 | 0 | 0 | 0 | 0.69 | 0 | 3.5 |
| POLYESTER B | 97 | 3 | 100 | 0 | 0 | 0 | 0 | 0.79 | 0 | 1.7 |
| POLYESTER C | 100 | 0 | 69 | 22 | 0 | 9 | 0 | 0.77 | 0 | 2.0 |
| POLYESTER D | 100 | 0 | 67 | 0 | 0 | 3 | 30 | 0.73 | 0 | 2.8 |
| POLYESTER E | 100 | 0 | 100 | 0 | 0 | 0 | 0 | 0.62 | 0 | 2.5 |
| POLYESTER F | 100 | 0 | 100 | 0 | 0 | 0 | 0 | 0.61 | 20000 | 2.5 |

(Example 1)

The above-described polyester A raw material, polyester C raw material, and polyester F raw material were mixed, charged into a hopper immediately above an extruder, and supplied to the extruder. At this time, the mixing ratio of the raw materials was polyester A : polyester C : polyester F = 25 : 72 : 3.

As the extruder, a biaxial extruder was used. A screw had a kneading disc, and the number of screw threads was two. The rotation speed of the screw was set to 200 rpm. The cylinder temperature of a feed section of the extruder was 215°C, the cylinder temperature of a melt-mixing section was 300°C, and the cylinder temperature of an extrusion section was 265°C. A gear pump was installed after the extruder, and a discharge amount was adjusted to 473 kg/h. A filling rate is 2.4.

The resin extruded from the extruder was extruded from a T-die and then quenched to obtain an un-stretched film. This un-stretched film was guided to a tenter, preheated at a set temperature of 105°C, and then stretched 4.5 times in a width direction at a stretching temperature of 75°C by widening a clip interval. Furthermore, the film was guided to a final heat treatment zone, and subjected to a heat treatment at a film temperature of 78°C, and the stretched pattern was narrowed to achieve a relaxation rate of 3% in the width direction, followed by cooling. Both edges were cut and removed, and the film was obtained by being wound in a roll shape with a width of 500 mm. The thickness of the stretched film was 40 μm. The film was continuously wound using a paper tube to obtain a film roll.

The production method and evaluation results of the film are shown in Table 2.

(Examples 2 to 8)

Films were collected by various changing the blending ratios and discharge amounts of raw materials, cylinder temperatures, and tenter relaxation rates. Film formation conditions and evaluation results are shown in Table 2.

(Comparative Examples 1 to 6)

Films of Comparative Examples 1 to 6 were collected in the mixing ratios of polyesters, and film formation conditions shown in Table 2. The results are shown in Table 2.

[Table 2A]

| MIXING RATIO | RAW MATERI-AL | MIXING RATIO | | | Example 1 | Example 2 | Example 3 | Example 4 | Example 5 | Example 6 | Example 7 |
|---|---|---|---|---|---|---|---|---|---|---|---|
| | | POLYESTER A | % by mass | | 25 | 45 | 45 | 45 | 0 | 0 | 0 |
| | | POLYESTER B | | | 0 | 0 | 0 | 0 | 45 | 25 | 5 |
| | | POLYESTER C | | | 72 | 52 | 52 | 52 | 52 | 72 | 72 |
| | | POLYESTER D | | | 0 | 0 | 0 | 0 | 0 | 0 | 0 |
| | | POLYESTER E | | | 0 | 0 | 0 | 0 | 0 | 0 | 20 |
| | | POLYESTER F | | | 3 | 3 | 3 | 3 | 3 | 3 | 3 |

| | | | | | Example 1 | Example 2 | Example 3 | Example 4 | Example 5 | Example 6 | Example 7 |
|---|---|---|---|---|---|---|---|---|---|---|---|
| FILM FORMA-TION CONDI-TIONS | EXTRUSION | EXTRUDER | NUMBER OF AXES | AXIS | BIAXIAL | BIAXIAL | BIAXIAL | BIAXIAL | BIAXIAL | BIAXIAL | BIAXIAL |
| | | | NUMBER OF SCREW THREADS | | DOUBLE THREAD SCREW | DOUBLE THREAD SCREW | DOUBLE THREAD SCREW | DOUBLE THREAD SCREW | DOUBLE THREAD SCREW | DOUBLE THREAD SCREW | DOUBLE THREAD SCREW |
| | | | DISCHARGE AMOUNT | kg/h | 473 | 473 | 473 | 473 | 473 | 473 | 473 |
| | | | SCREW ROTATION SPEED | rpm | 200 | 200 | 200 | 200 | 200 | 200 | 200 |
| | | | FILLING RATE | | 2.4 | 2.4 | 2.4 | 2.4 | 2.4 | 2.4 | 2.4 |
| | | CYLINDER TEM-PERATURE | FEED SEC-TION | °C | 215 | 225 | 225 | 225 | 225 | 215 | 210 |
| | | | MELT-MIXING SECTION | | 300 | 310 | 310 | 310 | 310 | 300 | 300 |
| | | | EXTRUSION SECTION | | 265 | 270 | 270 | 270 | 270 | 265 | 260 |
| | TENTER | PREHEATING TEMPERATURE | | °C | 105 | 105 | 105 | 105 | 105 | 105 | 105 |
| | | STRETCHING TEMPERATURE | | °C | 75 | 75 | 75 | 75 | 75 | 75 | 75 |
| | | STRETCHING RATIO | | TIMES | 4.5 | 4.5 | 4.5 | 4.5 | 4.5 | 4.5 | 4.5 |
| | | RELAXATION RATE | | % | 3 | 3 | 2 | 1 | 3 | 3 | 3 |
| | | HEAT SETTING TEMPERATURE | | °C | 78 | 78 | 78 | 78 | 78 | 78 | 78 |
| | | FILM THICKNESS | | μm | 40 | 40 | 40 | 40 | 40 | 40 | 40 |

EP 4 745 182 A1

| | | | Example 1 | Example 2 | Example 3 | Example 4 | Example 5 | Example 6 | Example 7 |
|---|---|---|---|---|---|---|---|---|---|
| EVALUATION | PERCENTAGE CONTENT OF RECYCLED POLYESTER | % | 25 | 45 | 45 | 45 | 45 | 25 | 5 |
| | AREA PROPORTION OF REGION HAVING MOLECULAR WEIGHT OF 1000 OR LESS | % | 4.1 | 5.1 | 5.1 | 5.1 | 3.2 | 2.4 | 3.2 |
| | INTRINSIC VISCOSITY (IV) | dl/g | 0.68 | 0.63 | 0.63 | 0.63 | 0.67 | 0.71 | 0.70 |
| | AMOUNT OF AMORPHOUS COMPONENT — IPA AMOUNT | % | 1.4 | 0.8 | 0.8 | 0.8 | 1.4 | 0.8 | 0.2 |
| | AMOUNT OF AMORPHOUS COMPONENT — NPGAMOUNT | | 11.4 | 15.8 | 15.8 | 15.8 | 11.4 | 15.8 | 15.8 |
| | AMOUNT OF AMORPHOUS COMPONENT — AMOUNT OF AMORPHOUS | | 12.8 | 16.6 | 16.6 | 16.6 | 12.8 | 16.6 | 16.0 |
| | SHRINKAGE RATE BEFORE AGING — 70°C LONGITUDINAL DIRECTION | % | 1.5 | 0.5 | 0.7 | 0.8 | 0.6 | 1.2 | 1.1 |
| | SHRINKAGE RATE BEFORE AGING — 70°C WIDTH DIRECTION | | 29.8 | 13.4 | 15.2 | 15.7 | 12.1 | 27.6 | 27.3 |
| | SHRINKAGE RATE BEFORE AGING — 90°C LONGITUDINAL DIRECTION | | 8.9 | 6.8 | 7.0 | 7.0 | 6.5 | 8.5 | 8.6 |
| | SHRINKAGE RATE BEFORE AGING — 90°C WIDTH DIRECTION | | 67.6 | 58.8 | 60.1 | 61.2 | 55.6 | 64.8 | 65.0 |
| | SHRINKAGE RATE AFTER AGING — 70°C LONGITUDINAL DIRECTION | % | 1.3 | 0.4 | 0.7 | 0.7 | 0.5 | 1.0 | 0.9 |
| | SHRINKAGE RATE AFTER AGING — 70°C WIDTH DIRECTION | | 26.5 | 10.6 | 9.5 | 9.4 | 11.0 | 26.4 | 25.6 |
| | AGING REDUCTION RATE | % | 3.3 | 2.8 | 5.7 | 6.3 | 1.1 | 1.2 | 1.7 |
| | SHRINKAGE STRESS — 90°C WIDTH DIRECTION | Mpa | 9.2 | 13.5 | 14.1 | 14.8 | 13.8 | 9.8 | 10.1 |
| | ENTIIALPY RELAXATION AMOUNT | J/g | 3.1 | 3.5 | 3.8 | 3.9 | 2.4 | 1.6 | 1.8 |
| | SHRINKAGE FINISH PROPERTY — BEFORE AGING | | 5 | 4 | 4 | 4 | 5 | 5 | 4 |
| | SHRINKAGE FINISH PROPERTY — AFTER AGING | | 5 | 5 | 5 | 5 | 4 | 4 | 5 |

EP 4 745 182 A1

23

| | | | | | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| MIXING RATIO | RAW MATERIAL | MIXING RATIO | POLYESTER A | % by mass | 5 | 45 | 45 | 45 | 45 | 0 | 0 |
| | | | POLYESTER B | | 0 | 0 | 0 | 0 | 0 | 55 | 0 |
| | | | POLYESTERC C | | 72 | 52 | 0 | 0 | 52 | 42 | 52 |
| | | | POLYESTER D | | 0 | 0 | 52 | 52 | 0 | 0 | 0 |
| | | | POLYESTER E | | 20 | 0 | 0 | 0 | 0 | 0 | 45 |
| | | | POLYESTER F | | 3 | 3 | 3 | 3 | 3 | 3 | 3 |
| FILM FORMA-TION CONDI-TIONS | EXTRUSION | EXTRUDER | NUMBER OF AXES | AXIS | BIAXIAL | BIAXIAL | BIAXIAL | BIAXIAL | BIAXIAL | BIAXIAL | BIAXIAL |
| | | | NUMBER OF SCREW THREADS | | DOUBLE THREAD SCREW | DOUBLE THREAD SCREW | DOUBLE THREAD SCREW | DOUBLE THREAD SCREW | DOUBLE THREAD SCREW | DOUBLE THREAD SCREW | DOUBLE THREAD SCREW |
| | | | DISCHARGE AMOUNT | kg/h | 473 | 473 | 473 | 473 | 473 | 473 | 473 |
| | | | SCREW ROTATION SPEED | rpm | 200 | 200 | 200 | 200 | 200 | 200 | 200 |
| | | | FILLING RATE | - | 2.4 | 2.4 | 2.4 | 2.4 | 0.8 | 2.4 | 2.4 |
| | | CYLINDER TEMPERATURE | FEED SECTION | °C | 210 | 225 | 225 | 225 | 225 | 230 | 225 |
| | | | MELT-MIXING SECTION | | 300 | 310 | 310 | 300 | 310 | 310 | 310 |
| | | | EXTRUSION SECTION | | 260 | 270 | 270 | 250 | 270 | 270 | 270 |
| | TENTER | PREHEATING TEMPERATURE | | °C | 105 | 105 | 105 | EXTRUSION FAILED | 105 | 105 | 105 |
| | | STRETCHING TEMPERATURE | | °C | 75 | 75 | 75 | | 75 | 79 | 75 |
| | | STRETCHING RATIO | | TIMES | 4.5 | 4.5 | 4.5 | | 4.5 | 4.5 | 4.5 |
| | | RELAXATION RATE | | % | 3 | 0.5 | 3 | | 3 | 3 | 3 |
| | | HEAT SETTING TEMPERATURE | | °C | 78 | 78 | 78 | | 78 | 78 | 78 |
| | | FILM THICKNESS | | μm | 40 | 40 | 40 | | 40 | 40 | 40 |
| EVALUATION | PERCENTAGE CONTENT OF RECYCLED POLYESTER | | | % | 5 | 45 | 45 | | 45 | 55 | 0 |

| | | | Example 8 | Comparative Example 1 | Comparative Example 2 | Comparative Example 3 | Comparative Example 4 | Comparative Example 5 | Comparative Example 6 |
|---|---|---|---|---|---|---|---|---|---|
| | AREA PROPORTION OF REGION HAVING MOLECULAR WEIGHT OF 1000 OR LESS | % | 3.6 | 5.2 | 7.9 | | 6.5 | 1.5 | 4.0 |
| | INTRINSIC VISCOSITY (IV) | dl/g | 0.67 | 0.63 | 0.64 | | 0.63 | 0.72 | 0.62 |
| AMOUNT OF AMORPHOUS COMPONENT | IPA AMOUNT | % | 0.2 | 0.8 | 1.4 | | 0.8 | 1.7 | 0.0 |
| | NPG AMOUNT | | 15.8 | 15.8 | 0.0 | | 15.8 | 9.2 | 11.4 |
| | AMOUNT OF AMORPHOUS | | 16.0 | 16.6 | 17.0 | | 16.6 | 10.9 | 11.4 |
| SHRINKAGE RATE BEFORE AGING | 70°C LONGITUDINAL DIRECTION | % | 1.5 | 0.7 | 0.8 | | 0.7 | 0.4 | 0.5 |
| | 70°C WIDTH DIRECTION | | 28.8 | 16.0 | 15.3 | | 15.4 | 5.4 | 12.2 |
| | 90°C LONGITUDINAL DIRECTION | | 8.8 | 6.9 | 6.9 | | 7.5 | 2.1 | 6.5 |
| | 90°C WIDTH DIRECTION | | 66.3 | 61.3 | 59.5 | | 59.8 | 36.7 | 57.9 |
| SHRINKAGE RATE AFTER AGING | 70°C LONGITUDINAL DIRECTION | % | 1.3 | 0.4 | 0.4 | | 0.4 | 2.2 | 0.3 |
| | 70°C WIDTH DIRECTION | | 25.2 | 0.6 | 0.2 | | 1.2 | 5.1 | 10.8 |
| | AGING REDUCTION RATE | % | 3.6 | 15.4 | 15.1 | | 14.2 | 0.3 | 1.4 |
| SHRINKAGE STRESS | 90°C WIDTH DIRECTION | Mpa | 9.5 | 16.4 | 10.2 | | 14.3 | 15.9 | 13.6 |
| | ENTHALPY RELAXATION AMOUNT | J/g | 2.2 | 4.1 | 5.3 | | 6.7 | 1.1 | 2.4 |
| SHRINKAGE FINISH PROPERTY | | BEFORE AGING | | 4 | 4 | 5 | | 4 | 3 | 4 |
| | AFTER AGING | | 5 | 2 | 1 | | 2 | 3 | 5 |

EP 4 745 182 A1

The heat-shrinkable polyester film of each of Examples of the present invention was a transverse uniaxially stretched film containing a predetermined amount of recycled polyester and having a predetermined heat shrinkage rate and an area proportion of a region having a molecular weight of 1000 or less, and had good label finish property, small deterioration of heat shrinkage characteristics after aging, and excellent label shrinkage finish property after aging.

In Comparative Example 1, the aging reduction rate was large, and the shrinkage finish property after aging was poor.

In Comparative Example 2, CHDM was contained in a raw material polyester, and heat decomposition occurred in a melting step, and thus the area proportion of the region having a molecular weight of 1000 or less was large, the aging reduction rate was large, and label slack was observed for the shrinkage finish property after aging.

In Comparative Example 3, the extrusion temperature was set to 250°C in order to suppress the heat decomposition observed in Comparative Example 2, but the polyester A was discharged as an unmelted material, and could not be extruded.

In Comparative Example 4, the aging reduction rate was large, and the shrinkage finish property after aging was poor.

In Comparative Example 5, the ratio of the recycled polyester was high, the heat shrinkage rate was insufficient, and label slack was observed for the shrinkage finish property.

In Comparative Example 6, the recycled polyester is not contained, and thus contribution to the reduction of the environmental burden is extremely small.

INDUSTRIAL APPLICABILITY

Since a heat-shrinkable polyester film of the present invention has excellent characteristics as described above, the heat-shrinkable polyester film can be suitably used for labels for bottles and the like. A package such as a bottle obtained by using the heat-shrinkable polyester film of the present invention as a label has a beautiful appearance.

**Claims**

1. A heat-shrinkable polyester film comprising a polyester composition containing 1% by mass or more and 50% by mass or less of a mechanically recycled and/or chemically recycled polyester,

    wherein the heat-shrinkable polyester film has a shrinkage stress of 3.0 MPa or more and 15.0 MPa or less,
    the heat-shrinkable polyester film has an intrinsic viscosity of 0.58 dl/g or more and 0.75 dl/g or less,
    an area proportion of a region having a molecular weight of 1000 or less is 1.0% or more and 6.0% or less of a total peak area in a molecular weight distribution curve obtained by gel permeation chromatography, and
    the heat-shrinkable polyester film has a heat shrinkage rate of 20.0% or more and 80.0% or less in a main shrinkage direction when the heat-shrinkable polyester film is immersed in hot water at 90°C for 10 seconds.

2. The heat-shrinkable polyester film according to claim 1,

    wherein the polyester composition comprises the mechanically recycled polyester, and
    the area proportion of the region having a molecular weight of 1000 or less is 2.0% or more and 6.0% or less in the molecular weight distribution curve obtained by gel permeation chromatography.

3. The heat-shrinkable polyester film according to claim 1,

    wherein the polyester composition comprises the chemically recycled polyester, and
    the area proportion of the region having a molecular weight of 1000 or less is 1.0% or more and 5.5% or less in the molecular weight distribution curve obtained by gel permeation chromatography.

4. The heat-shrinkable polyester film according to claim 1, wherein a percentage content of isophthalic acid in 100 mol% of total acid components of the polyester composition is 0.1 mol% or more and 3.0 mol% or less.

5. The heat-shrinkable polyester film according to claim 1, wherein when the heat-shrinkable polyester film after aging is immersed in hot water at 70°C for 10 seconds after being aged under an atmosphere of 30°C/85%R.H. for 672 hours, a reduction rate of the heat shrinkage rate in the main shrinkage direction is 15.0% or less with respect to that before aging, and an enthalpy relaxation amount after aging is 4.0 J/g or less.

6. A heat-shrinkable label using the heat-shrinkable polyester film according to any one of claims 1 to 5.

7. A package in which at least a part of an outer periphery of an object to be packaged is covered with the heat-shrinkable label according to claim 6.

## INTERNATIONAL SEARCH REPORT

| International application No. |
|---|
| **PCT/JP2024/024217** |

### A. CLASSIFICATION OF SUBJECT MATTER

*C08J 5/18*(2006.01)i; *B29C 61/02*(2006.01)i; *B29C 61/06*(2006.01)i; *C08G 63/00*(2006.01)i; *C08L 67/00*(2006.01)i
FI:  C08J5/18 CFD; C08L67/00; B29C61/06; B29C61/02; C08G63/00

According to International Patent Classification (IPC) or to both national classification and IPC

### B. FIELDS SEARCHED

Minimum documentation searched (classification system followed by classification symbols)

C08J5/18; B29C61/02; B29C61/06; C08G63/00; C08L67/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/181436 A1 (TOYOBO CO., LTD.) 01 September 2022 (2022-09-01) claims, paragraphs [0028]-[0037], examples | 1-2, 4-7 |
| Y | | 3 |
| Y | WO 2022/049998 A1 (TOYOBO CO., LTD.) 10 March 2022 (2022-03-10) claims, examples | 3 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 September 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/024217**

| Patent document cited in search report | | | Publication date (day/month/year) | Patent family member(s) | | | Publication date (day/month/year) |
|---|---|---|---|---|---|---|---|
| WO | 2022/181436 | A1 | 01 September 2022 | US | 2024/0132683 | A1 | |
| | | | | claims, paragraphs [0049]-[0069], examples | | | |
| WO | 2022/049998 | A1 | 10 March 2022 | US | 2023/0365804 | A1 | |
| | | | | claims, examples | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022181436 A
- JP 6337774 B
- JP 2000169623 A
- JP 2000302707 A